# EUROPEAN PATENT APPLICATION

(11) **EP 4 506 247 A1**
(43) Date of publication of application: **12.02.2025**
(21) Application number: 23190599.3
(22) Date of filing: 09.08.2023
(51) Int. Cl.: B64D 11/04, B64D 11/00

(54) **CREW REST GALLEY WITH A STOWABLE BED**

(71) Applicant: B/E Aerospace, Inc., Winston-Salem, NC 27105 (US)
(72) Inventor: SUNGA, Jay William, 2016 Apalit Pampanga (PH); CAMACHO, Boris Dimapilis, 3007 Bustos (PH); DELA CRUZ, Ma Anicia Bautista, 1900 Cainta (PH); FONTANILLA, Mylene Morante, 2105 Mariveles (PH); LICOS, Allan Gonzales, 4024 Binan (PH); MALABANAN, John Erick Dimatatac, San Pascual 4204 (PH); NEGRE, Ergen Sawit, 4234 Sto. Tomas (PH); LUCENAS, Gerry Marlou Pagalan, 1205 Makati City (PH); TADEJA, May Lanie Salmorin, 4025 Cabuyao (PH)
(74) Representative: Dehns

(57) **Abstract**

A galley (100) for an aircraft is described comprising a first section (120), the first section (120) having an upper surface (140), and wherein the upper surface is configured to be extendable along a first axis and in a first direction to form a bed. The first section may comprise a first hollow compartment (120), the first compartment (120) comprising a U-shaped compartment frame that has two opposing, vertically extending side portions (110, 120) and an upper, top portion (140) that extends horizontally between the first and second vertical side portions (120, 130). A sleeping module 105 may be provided within the first hollow compartment (120) and may comprise a stowable bedframe (155) stored within the first hollow compartment (120). The stowable bedframe (155) may be configured to be pulled out from the cavity of the first compartment (120) to form a bed.

## Description

### FIELD

The examples disclosed herein relate to a flight crew rest galley compartment for an aircraft.

### BACKGROUND

Flight rest crew compartments are mandatory for long-haul flights. Current flight rest crew compartments are, however, often cramped for movement and provide a small rest area. The access to the flight rest crew compartments may also be limited and, often these areas provide low levels of privacy.

Although widebody aircraft are often large or wide enough to have dedicated crew rest areas, for narrow body aircraft that are flying long haul routes, the crew do not have a dedicated crew rest area that has privacy and flat beds. On such aircraft the crew would have to block seats off, compromising the experience for passengers and crew.

### SUMMARY

According to a first aspect, a galley for an aircraft is provided comprising a first section, the first section having an upper surface, and wherein said upper surface is configured to be extended along a first axis and in a first direction to form a bed.

In some examples, the upper surface lies in a first, horizontal plane.

In some examples, the upper surface has a width extending along a second axis and in a second direction, wherein said first and second axes lie in said first, horizontal plane, and wherein said first and second axes are perpendicular to each other.

In some examples, when the upper surface is extended to form a bed, said length is longer than said width.

In some examples, said first section has two, opposing, vertically extending side portions and said width of said upper surface extends horizontally in said second direction between the first and second vertical side portions.

In some examples, said first section comprises a first, hollow compartment.

In some examples, said first hollow compartment comprises a U-shaped compartment frame.

In some examples, the galley comprises a sleeping module that is provided within the first hollow compartment and further comprises a stowable bedframe associated with said first hollow compartment.

In some examples, the stowable bedframe is configured to be pulled out from the cavity of the first compartment to form said bed.

In some examples, the stowable bedframe is stored within said first hollow compartment when it is not pulled out and in the form of a bed.

In some examples, the stowable bedframe is attached to said first compartment via a bracket, said bracket being configured such that said stowable bedframe can be moved in said first direction such that said bedframe lies in said first horizontal plane, thereby extending said upper surface to its maximum length.

In some examples, the stowable bedframe is a U-shaped hollow frame that is configured to be moved in said first direction such that said bedframe lines in said first horizontal plane.

In some examples, the galley further comprises a step section that is associated with said second side of said first compartment, said step section being movable between a first position wherein said step section and said second side both lie in a second, vertical, plane, and a second position wherein step section extends in said second direction, away from said second side, to form a step.

In some examples, the galley further comprises a second section, comprising a second, hollow compartment configured for receiving one or more galley trolleys.

In some examples, said second section is provided adjacent to said second side of said first section.

### BRIEF DESCRIPTION OF THE DRAWINGS

Figure 1 shows a galley having a stowable bed before extension
Figure 2 shows a galley having a stowable bed fully extended
Figure 3 shows a galley having a stowable bed fully extended
Figure 4 shows a galley having a stowable bed fully extended
Figure 5 shows a galley having a stowable bed before extension
Figure 6 shows a bracket for a stowable bed
Figure 7 shows a pull-out section that can provide a step or chair when pulled out
Figure 8 shows a galley having a stowable bed before extension
Figure 9 shows a galley having a stowable bed fully extended

### DETAILED DESCRIPTION

A convertible galley is described herein for converting a galley space into a bed in an aircraft cabin. The convertible galley converts from an open galley space (that may be used to store cabin crew luggage) into a sleeping module that is suitable for accommodating at least one member of a flight crew. When converted into a sleeping module, the convertible galley may also provide an ascent region, e.g. integrated step or steps, which allows the flight crew member to ascend from a lower level and onto the upper surface of the sleeping module. That is, the stowable/pull out sleeping module may also have a stowable step or steps. In some examples, this stowable step may serve as a seat.

The examples described herein rely on stowable designs that enable the use of spaces that are not normally used during flight. For example, the area that covers the emergency exit door must be kept clear on take off and landing, however, during flight, this space is not utilised. When fully extended into a sleeping module during flight, the blocking of the emergency exit is therefore not an issue. Upon take-off and landing, the sleeping module can be moved out of the way of the exit door, such that there are no obstacles during emergencies or when the aircraft is on the ground.

The examples described herein can be provided as part of a galley, for example, it may be integrated into a 2-trolley bay galley. They may also be used with, or integrated into other type of galleys and they are not limited only to 2-trolley bay galleys.

The examples described are configured to provide a more functional (for both rest and capacity) design in comparison to known sleeping modules for aircraft. They can also be provided in an aircraft such that the galley size does not have to be altered, but wherein the space is maximised. The sleeping module also allows the cabin crew to lie horizontal and provides ergonomic advantages for the cabin crew.

As mentioned above, widebody aircraft are often large or wide enough to have dedicated crew rest areas, however, for narrow body aircraft that are flying long haul routes, the crew do not have a dedicated crew rest area that has privacy and flat beds. On such aircraft the crew would have to block seats off, compromising the experience for passengers and crew. The examples described herein therefor provide a new type of convertible sleeping module that overcomes this drawback, and provides a crew rest galley that not only maximises the space in the aircraft but which also provides improved comfort and privacy for the cabin crew.

Examples of the new design are now discussed in more detail with reference to the figures.

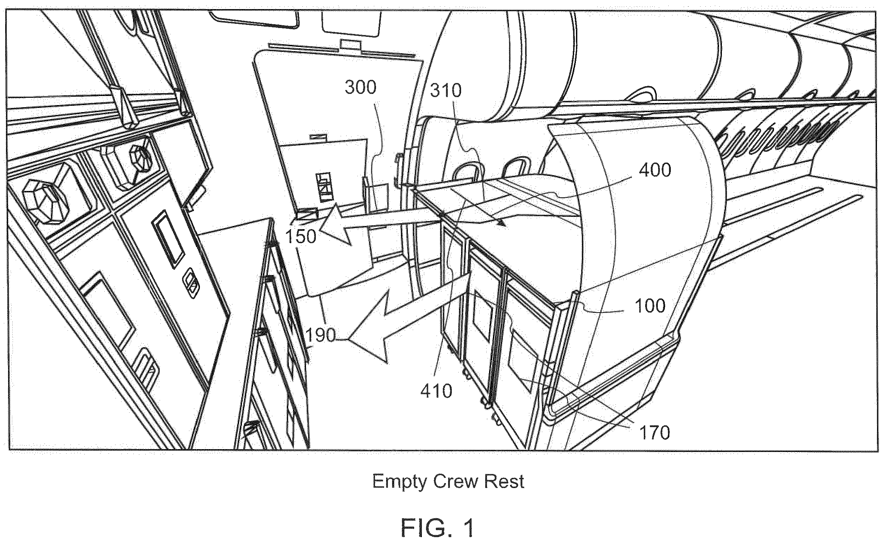

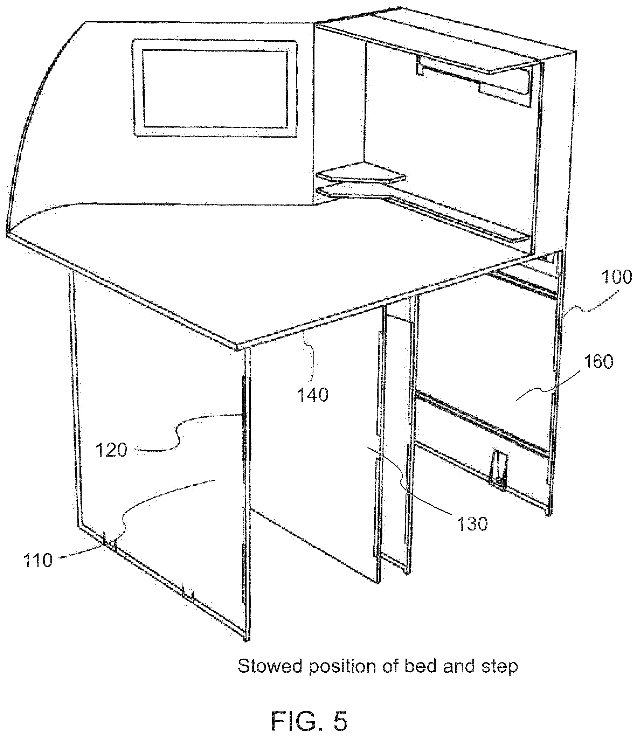

Figure 1 depicts a galley 100 positioned within an aircraft. The galley 100 is also shown in detail in figure 5. In the example shown in figure 5, the sleeping module, e.g. bed is stowed away, as are the step or steps.

The galley 100 may comprise a first section, which may comprise a first hollow, compartment 120 that has the stowable sleeping module 150 provided and stored therein when the bed is not in use.

As can be seen in figure 5, in some examples, the first compartment 120 may comprise a U-shaped frame that has two opposing, vertically extending side portions 110, 130 and an upper, top surface 140. As shown in figure 1, the top surface 140 is configured to be extended along a first axis 310 and in a first direction 300, such that it will eventually form part of the bed. The top surface 140 also has a width that extends horizontally along a second axis 410 and in a second direction 400 between the first and second vertical side portions 110, 130. The first and second axes 310, 410, lie in the same horizontal plane. The first and second axes 310, 410 extend perpendicularly to each other as shown in figure 5.

The first compartment 120 also has an internal surface that faces inwards and into the hollow cavity of the first compartment 120, wherein the top, external surface faces away from the first compartment 120, thereby acting as a table top surface as shown in the figures.

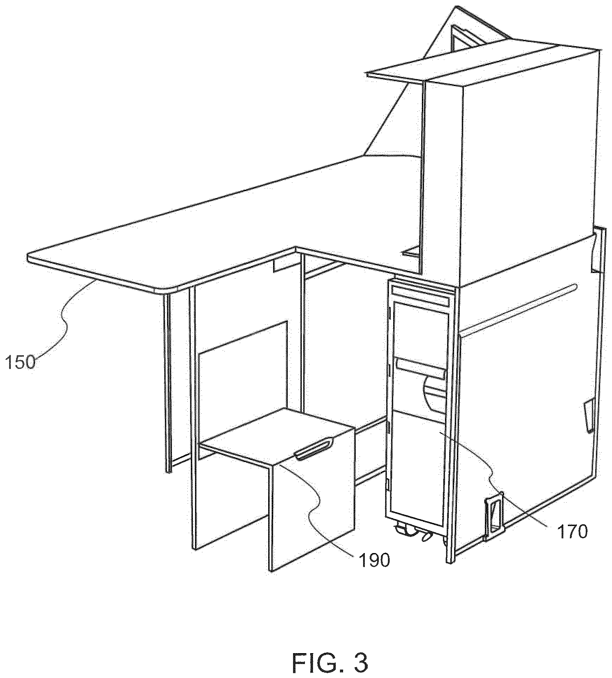

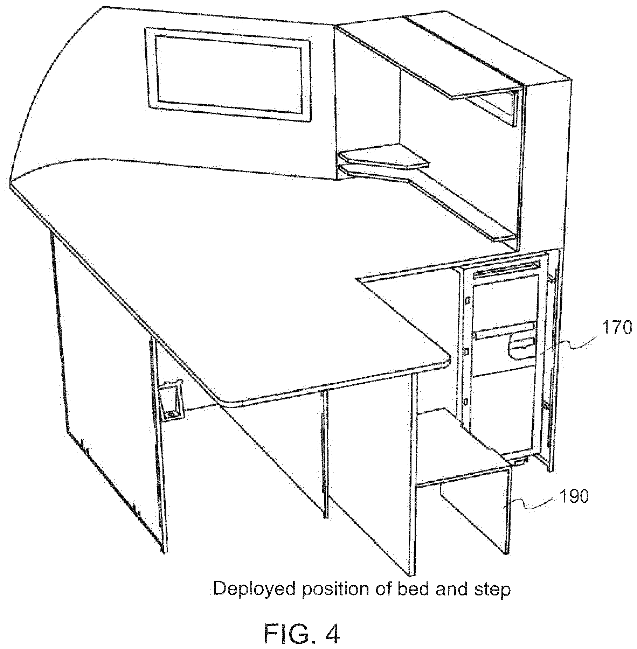

A first example of a sleeping module 150 is shown in figures 1 to 6. The sleeping module 150 is stowable within the first hollow compartment 120 when not in use. the sleeping module 150 takes up minimal space, such that when not in use, the cavity within the hollow frame of the first compartment 12 can be used to store luggage.

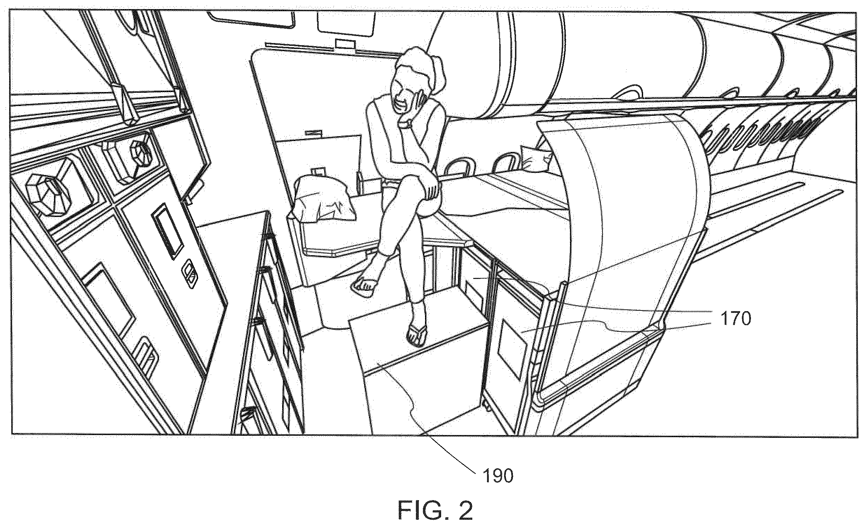

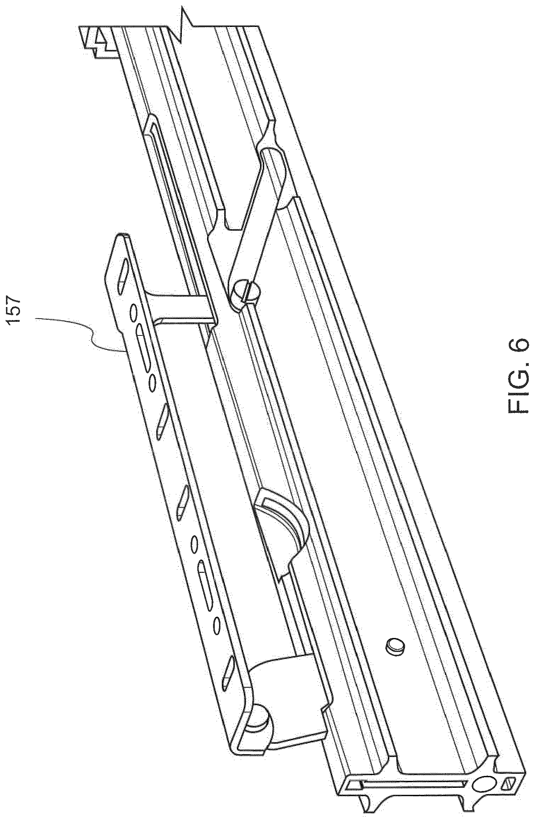

The sleeping module 150 may comprise a stowable bedframe that is configured to be pulled out from the internal cavity of the first compartment 120 as shown in figure 1. In some examples, this may be achieved by the stowable bed frame 150 being attached to a bracket 157 such as that as shown in figure 6. The bracket 157 may be attached to the internal surface of the first compartment 120. The bracket 157 may be configured such that, by sliding the bedframe 150 out of the cavity of the first compartment 120, the bed frame is configured to extend in the first direction 300 to a full-length bed, as shown in figure 2. The bracket may be configured such that when the bed frame 150 is fully extended, the bed frame forms an extension of the upper, top, surface that lies in the same horizontal plane as the top surface of the frame of the first compartment 120, thereby providing the full-length bed. In some examples the bracket 157 may utilise a front side lift roller to pull out the bedframe.

As can be seen in figures 1 and 2, and as discussed above, the fully extended sleeping module/bed 150 can be positioned such that it utilises the space in front of the emergency exit door, but is fully retracted when the aircraft is not in the air.

In addition to the above, the sleeping module may be provided with a pull-out seat/step section 190 that may be converted into steps or a chair as shown in figures 1, 2, 3, 4 and 7. The pull-out section 190 may comprise three panels 195, 196, 197. When stowed, this pull-out step section 190 may be stored such that it/each of the panels 195, 196, 197 lies flat in the same vertical plane as the second side of the first section 120. The step or steps can be pulled out from the second side and in the second direction 400 and are thereby configured to provide a step or steps which can function as a chair and/or steps providing access to the bed.

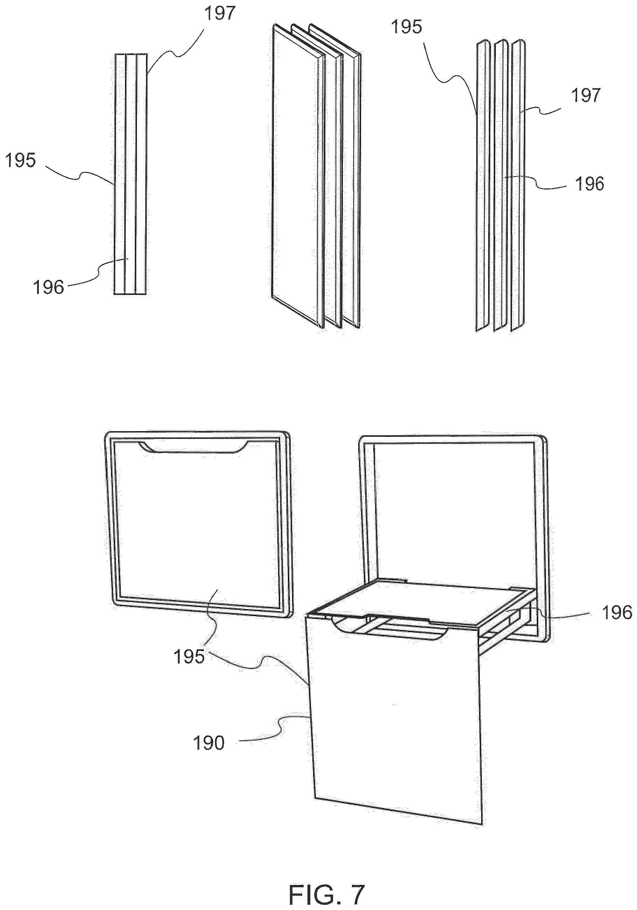

Figure 7 shows the three panels 195, 196, 197 that form the pull put section 190, when they are in their folded and unfolded position. As can be seen, when folded, i.e. not pulled out, the three panels 195, 196, 197 lie parallel to each other and are flat against each other. When pulled out in the second direction 400 the middle panel 196 lies in a plane that is perpendicular to the planes of the outside panels 195, 197. In this way, the middle panel 196 forms a seat or step. The pull-out section 190 may therefore provide a stowable step or chair 196, as shown in figure 7

In some examples, the galley 100 may also comprise a second compartment 160, which may be used to store a trolley, or trolleys 170, as shown in figures 1, 2, 3 and 4.

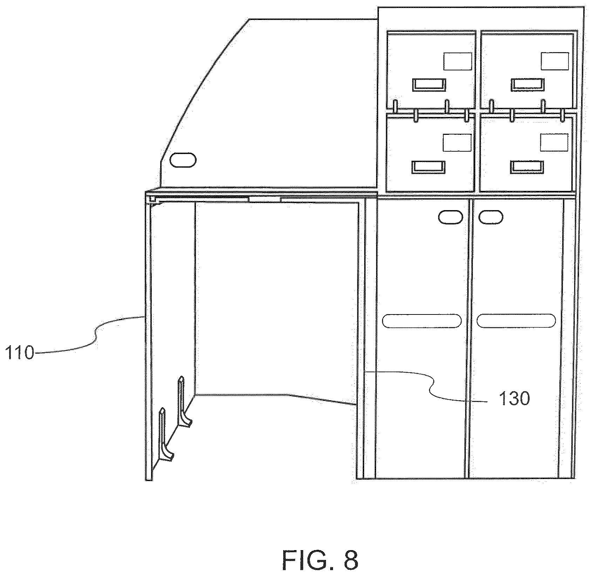

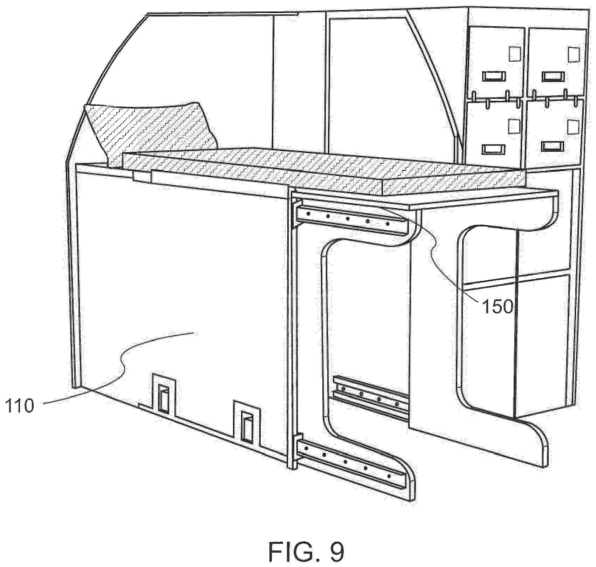

In another example, such as that shown in figures 8 and 9, the stowable bed frame may be slid out of the cavity within the first compartment. These figures correspond to that which is shown in figure 7. Figure 8 depicts the bed in an undeployed position and figure 9 shows the bed after it has been extended out to full length.

In summary, the examples of sleeping modules described herein provide a stowable pull out bed that is provided within a cavity of a galley and which may also have a stowable step that can also function as a chair. The crew rest area can also still function as an operational galley when the crew are not sleeping and the galley can be used to store trolleys. In addition to providing a comfortable and private crew rest area, the design also frees up seats by removing the need for airlines to block seats for crew to be able to rest. The seats can then be used by passengers instead.

The design also enables the use of space within the aircraft that is not normally used during flight but which has to be free of obstacles during emergencies, take off and landing, and when on the ground.

The design further uses the wasted space of the herringbone seat forward in business class. The galley can also, or alternatively be located at the rear of the cabin. The galley opposite is also not blocked and the bed can be easily and quickly stored away. The cabin crew can also sit on the bed, behind a curtain to change.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A galley (100) for an aircraft comprising a first section (120),
the first section (120) having an upper surface (140), and wherein said upper surface is configured to be extendable along a first axis (310) and in a first direction (300) to form a bed.

2. The galley of claim 1 wherein said upper surface (140) lies in a first, horizontal plane.

3. The galley of claim 2 wherein said upper surface has a width extending along a second axis (410) and in a second direction (400), wherein said first and second axes lie in said first, horizontal plane, and wherein said first and second axes are perpendicular to each other.

4. The galley of claim 3 wherein, when said upper surface is extended to form a bed, said length is longer than said width.

5. The galley of any preceding claim wherein said first section (120) has two, opposing, vertically extending side portions (110, 120) and said width of said upper surface (140) extends horizontally in said second direction between the first and second vertical side portions (120, 130).

6. The galley of any preceding claim wherein said first section (120) comprises a first, hollow compartment.

7. The galley of claim 6, wherein said first hollow compartment comprises a U-shaped compartment frame.

8. The galley of claim 5 or 6 further comprising a sleeping module (150) provided within the first hollow compartment (120) and comprising a stowable bedframe associated with said first hollow compartment (120).

9. The galley of claim 8, wherein said stowable bedframe (155) is configured to be pulled out from the cavity of the first compartment (120) to form said bed.

10. The galley of claim 9, wherein said stowable bedframe (155) is stored within said first hollow compartment when it is not pulled out and in the form of a bed.

11. The galley (100) of claim 10 wherein said stowable bedframe (155) is attached to said first compartment (100) via a bracket (157), said bracket being configured such that said stowable bedframe can be moved in said first direction such that said bedframe lies in said first horizontal plane.

12. The galley of claim 10 wherein said stowable bedframe is a U-shaped hollow frame that is configured to be moved in said first direction such that said bedframe lines in said first horizontal plane.

13. The galley (100) of any of claims 5 to 12, further comprising a pull out step section (190) associated with said second side of said first compartment, said step section (190) movable between a first position wherein said step section (190) and said second side both lie in a second, vertical, plane, and a second position wherein step section extends in said second direction, away from said second side, to form a step.

14. The galley (100) of any preceding claim further comprising a second section, comprising a second, hollow compartment (160) configured for receiving one or more galley trolleys.

15. The galley of claim 14 wherein said second section is provided adjacent to said second side of said first section.
